# EUROPEAN PATENT SPECIFICATION

(11) **EP 2 234 484 B1**
(45) Date of publication and mention of the grant of the patent: **05.12.2012**
(21) Application number: 08868626.6
(22) Date of filing: 18.12.2008
(51) Int. Cl.: A01N 43/38

(54) **USE OF TETRAMIC ACID DERIVATIVES FOR CONTROLLING NEMATODES**
VERWENDUNG VON TETRAMSÄUREDERIVATEN FÜR DIE KONTROLLE VON NEMATODEN
UTILISATION DE DÉRIVÉS D'ACIDE TÉTRAMIQUE POUR LUTTER CONTRE LES NÉMATODES

(30) Priority: 20.12.2007 US 8507
(43) Date of publication of application: 06.10.2010
(73) Proprietor: Bayer CropScience AG, 40789 Monheim (DE)
(72) Inventor: FISCHER, Reiner, 40789 Monheim (DE); STEFFENS, Robert, Cary NC 27513 (US); BELL, John, W., Chapel Hill NC 27516 (US); JIMENEZ, Manuel, Exeter CA 93221 (US); KRUEGER, Stephen, Raleigh NC 27609 (US); PERRY, John, L., Kingsburg CA 93631 (US)
(86) International application number: PCT/US2008/013829
(87) International publication number: WO 2009/085176

(56) References cited:
- EP-A- 0 076 580
- WO-A-2007/126691

## Description

The present invention relates to the use of known tetramic acid derivatives for controlling soil-dwelling nematodes.

It is already known that certain cyclic ketoenols have herbicidal, insecticidal and acaricidal properties. The activity of these substances is good; however, it is sometimes unsatisfactory at low application rates.

Known to have insecticidal and/or acaricidal action are 1H-3-aryl-pyrrolidine-2,4-dione derivatives (WO 98/05638) and their cis-isomers (WO 04/007448).

Also known are mixtures of compounds from WO 98/05638 with other insecticides and/or acaricides: WO 01/89300, WO 02/00025, WO 02/05648, WO 02/17715, WO 02/19824, WO 02/30199, WO 02/37963, WO 05/004603, WO 05/053405, WO 06/089665, DE-A-10342673, WO 2008/006516, WO 2008/006514, WO 2008/006513, WO 2008/006515, WO 2008/006512, WO 2008/009379. Also known are mixtures with nematicides: file number EP07112279.

Moreover, they are known to be active against plant bugs (family: Miridae) (WO 2007/131681)

Also, WO 2007/126691 discloses an activity against leaf nematodes following dip treatment of flower bulbs.

EP 0076580 discloses a foliar treatment against soil nematodes using macrolides.

Surprisingly, it has now been found that the compounds of the formulae (I-1) and (1-2) 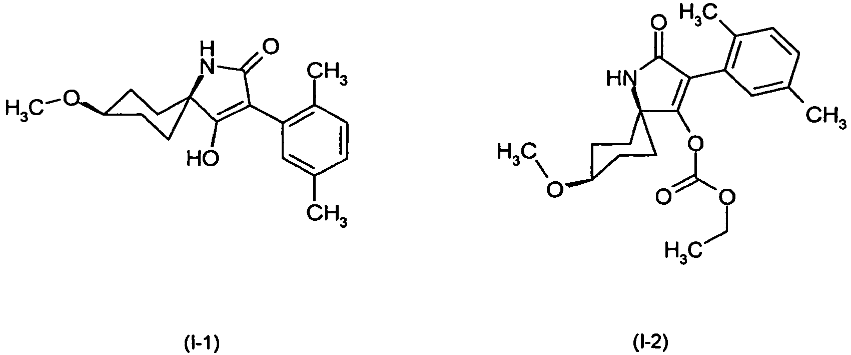 known from WO 04/007448 reduce the population density of soil-dwelling plant-damaging nematodes in annual and perennial crops after foliar treatment.

Preference is given to using the compound of the formula (I-1) for controlling soil-dwelling plant-damaging nematodes in perennial crops.

Preference is given to using the compound of the formula (I-1) for controlling soil-dwelling plant-damaging nematodes in annual crops.

Preference is also given to using the compound of the formula (I-2) for controlling soil-dwelling plant-damaging nematodes in perennial crops.

Preference is also given to using the compound of the formula (1-2) for controlling soil-dwelling plant-damaging nematodes in annual crops.

The phytoparasitic nematodes include, for example, Pratylenchus spp., Radopholus similis, Ditylenchus dipsaci, Tylenchulus semipenetrans, Heterodera spp., Globoderaspp., Meloidogyne spp., Aphelenchoides spp., Longidorus spp., Xiphinema spp., Trichodorus spp., Bursaphelenchus spp., Belonolaimus longicaudatus, Mesocriconema xenoplax, Tylenchorhynchus spp., Rotylenchulus spp., Helicotylenchus multicinctus, Paratrichodorus spp., Paratylenchus spp., Criconemella spp., Hoplolaimus spp., Scutellonema spp., and Dolichodorus spp..

Perennial crops are to be understood as meaning citrus fruit, pomme fruit, stone fruit, grapevine, tea, almonds, nuts, coffee, tropical fruit, soft fruit, ornamental plants, lawn and olives.

Annual crops are to be understood as meaning vegetable, tobacco, melons, beet, sugar beet, cereals, corn, cotton, soya and potatoes.

Growth-regulating insecticides such as the compounds of the formulae (I-1) and (1-2) generally act slowly and have no killing effect on adult animals. Owing to the slow onset of action and a short half-life in the soil, a nematode-controlling application against soil-dwelling nematodes was not expected to be feasable. It is highly surprising that the compounds of the formulae (I-1) and (1-2) are, after foliar application, suitable for controlling nematodes in spite of the slow onset of action.

The crops to be protected, which have only been described in a general manner, are specified in a differentiated and more in-depth manner below. Thus, with a view to application, citrus fruit is to be understood as meaning, for example, oranges, clementines, satsumas, lemons, grapefruits, cumquats, mandarines,
furthermore pomme fruit, such as apples, pears, but also stone fruit, such as peaches, nectarines, cherries, apricots,
furthermore grapevine, olives, tea, and tropical crops, such as, for example, mangoes, papayas, figs, pineapples, dates, bananas, durians, passion fruit, kakis, coconuts, cacao, coffee, avocados, lychees, maracujas, guavas, sugar cane,
moreover almonds and nuts, such as, for example, hazelnuts, walnuts, pistachios, cashew nuts, brazil nuts, pecan nuts, butter nuts, chestnuts, hickory nuts, macadamia nuts, peanuts,
additionally also soft fruit, such as, for example, blackcurrants, gooseberries, raspberries, blackberries, blueberries, strawberries, red bilberries, kiwis, cranberries.

With respect to the use, ornamental plants are to be understood as meaning, for example, cut flowers, such as, for example, roses, carnations, gerbera, lilies, marguerites, chrysanthemums, tulips, daffodils, anemones, poppies, amaryllis, dahlias, azaleas, malves, gardenias, euphobias,
furthermore, for example, bedding plants, potted plants and shrubs, such as, for example, roses, hibiscus, chrysanthemums,
furthermore, for example, bushes and conifers, such as, for example, fig trees, rhododendron, spruce trees, fir trees, pine trees, yew trees, juniper trees, but also lawn, such as, for example, golf lawn, garden lawn.

With respect to the use, vegetables are understood as meaning for example fruiting vegetables and inflorescences as vegetables, for example bell peppers, chillies, tomatoes, aubergines, cucumbers, pumpkins, courgettes, broad beans, climbing and dwarf beans, peas, artichokes, maize;
but also leafy vegetables, for example head-forming lettuce, chicory, endives, various types of cress, of rocket, lamb's lettuce, iceberg lettuce, leeks, spinach, Swiss chard;
furthermore tuber vegetables, root vegetables and stem vegetables, for example celeriac/celery, beetroot, carrots, radish, horseradish, scorzonera, asparagus, beet for human consumption, palm hearts, bamboo shoots, furthermore bulb vegetables, for example onions, leeks, Florence fennel, garlic;
furthermore Brassica vegetables such as cauliflower, broccoli, kohlrabi, red cabbage, white cabbage, curly kale, Savoy cabbage, Brussels sprouts, Chinese cabbage.

With respect to the use in cereal crops, cereal is to be understood as meaning, for example, wheat, barley, rye, oats, triticale but also maize and millet.

Particularly preferred are, from the family of the
Pratylenchidae,

| | |
|---|---|
| Radopholus brevicaudatus | in citrus fruit, tropical fruit, e.g. bananas, coffee, coconuts, avocado; tea, ornamental plants, lawn |
| Radopholus capitatus | |
| Radopholus cavenessi | |
| Radopholus clarus | |
| Radopholus citrophilus | |
| Radopholus crenatus | |
| Radopholus inaequalis | |
| Radopholus inanis | |
| Radopholus intermedius | |
| Radopholus laevis | |
| Radopholus litoralis | |
| Radopholus magniglans | |
| Radopholus megadorus | |
| Radopholus nativus | |
| Radopholus neosimilis | |
| Radopholus nigeriensis | |
| Radopholus rectus | |
| Radopholus rotundisemenus | |
| Radopholus serratus | |
| Radopholus similis | |

| | |
|---|---|
| Radopholus trilineatus | |
| Radopholus triversus | |
| Radopholus vacuus | |
| Radopholus vangundyi | |
| Radopholus vertexplanus | |
| Radopholus williamsi | |
| Pratylenchus coffeae | in tropical fruit, e.g. bananas, coffee, pineapples, nuts, e.g. walnuts, ornamental plants, e.g. roses; strawberries |
| Pratylenchus brachyurus | |
| Pratylenchus fallax | |
| Pratylenchus goodeyi | |
| Pratylenchus vulnus | |
| Pratylenchus penetrans | |

Particular preference is furthermore given to

| | |
|---|---|
| Xiphinema americanum | in crops such as grapevines, soft fruit, e.g. strawberries, conifers, e.g. pines, ornamental plants, e.g. roses, stone fruit |
| Xiphinema diversicaudatum | |
| Xiphinema index | |
| Longidorus elongatus | in crops such as soft fruit, e.g. strawberries, shrubs, perennial crops |
| Meloidogyne incognita | in crops such as grapevines, peanuts, sugar cane, tomatoes |
| Meloidogyne hapla | |
| Meloidogyne arenaria | |
| Meloidogyne javanica | |
| Tylenchulus semipenetrans (Family: Tylenchulidae) | in crops such as citrus fruit, e.g. oranges, grapefruits, lemons, mandarines, grapevines, olives, tropical fruit, e.g. persimmon |
| Belonolaimus longicaudatus (Family: Belonolaimidae) | in crops such as citrus fruit, e.g. oranges, grapefruits, lemons, mandarines, soft fruit, e.g. strawberries, lawn, conifers, e.g. spruce |
| Mesocriconema xenoplax | in crops such as grapevines, nuts, e.g. almonds, walnuts Rotylenchulus reniformis in crops such as tropical fruit, e.g. bananas, pineapples, papayas, melons, passion fruit, coffee, in citrus fruit, e.g. oranges, grapefruits, ornamental plants, e.g. gardenias, euphorbias |
| Helicotylenchus multicinctus | in crops such as tropical fruit, e.g. bananas |

All plants and plant parts can be treated in accordance with the invention. In this context, plants are understood as meaning all plants and plant populations such as desired and undesired wild plants or crop plants (including naturally occurring crop plants). Crop plants can be plants which can be obtained by traditional breeding and optimization methods or by biotechnological and recombinant methods, or combinations of these methods, including the transgenic plants and including the plant varieties which are capable or not capable of being protected by Plant Breeders' Rights. Plant parts are understood as meaning all aerial and subterranean parts and organs of the plants such as shoot, leaf, flower, examples which may be mentioned being leaves, needles, stalks, stems, flowers, fruit bodies, fruits. The plant parts also include crop material and vegetative and generative propagation material, for example cuttings, slips.

The treatment according to the invention with the active compound, of the plants and plant parts, is effected directly or by treating their environment, habitat or store using conventional treatment methods, for example by spraying, fogging, brushing on, injecting.

As already mentioned above, all plants and their parts can be treated in accordance with the invention. In a preferred embodiment, plant species and plant varieties which are found in the wild or which are obtained by traditional biological breeding methods, such as hybridization or protoplast fusion, and parts of these species and varieties are treated. In a further preferred embodiment, transgenic plants and plant varieties which were obtained by recombinant methods, if appropriate in combination with traditional methods (genetically modified organisms) and their parts are treated. The terms "parts", "parts of plants" or "plant parts" were described above.

Plants which are especially preferably treated in accordance with the invention are those of the varieties which are in each case commercially available or in use. Plant varieties are understood as meaning plants with novel traits which have been bred both by conventional breeding, by mutagenesis or by recombinant DNA techniques. They may take the form of varieties, biotypes or genotypes.

Depending on the plant species or plant varieties, their location and growth conditions (soils, climate, vegetation period, nutrition), superadditive ("synergistic") effects may also occur as a result of the treatment according to the invention. Effects which exceed the effects actually to be expected are, for example, reduced application rates and/or widened activity spectrum and/or an enhancement of the activity of the substances and compositions which can be used in accordance with the invention, better plant growth, increased tolerance to high or low temperatures, increased tolerance to drought or to water or soil salinity, increased flowering performance, facilitated harvest, speedier maturation, higher yields, higher quality and/or higher nutritional value of the crop products, better storability and/or processibility of the crop products.

The preferred transgenic plants or plant varieties (plants or plant varieties obtained by means of genetic engineering) which are to be treated in accordance with the invention include all plants which, by means of the recombinant modification, have received genetic material which confers particularly advantageous valuable traits to these plants. Examples of such traits are better plant growth, increased tolerance to high or low temperatures, increased tolerance to drought or to water or soil salinity, increased flowering performance, facilitated harvest, speedier maturation, higher yields, higher quality and/or higher nutritional value of the crop products, better storability and/or processibility of the crop products. Other examples of such traits which are particularly emphasized are an improved defence of the plants against animal and microbial pests such as insects, mites, phytopathogenic fungi, bacteria and/or viruses, and an increased tolerance of the plants to specific herbicidal active compounds. Examples of transgenic plants which are mentioned are the important crop plants such as cereals (wheat, rice), maize, soybean, potato, cotton, tobacco, oilseed rape and fruit plants (with the fruits apples, pears, citrus fruits and grapes), with particular emphasis on maize, soybean, potatoes, cotton, tobacco and oilseed rape. Traits which are particularly emphasized are the increased defence of the plants against insects, arachnids, nematodes and slugs and snails as the result of toxins formed in the plants, in particular toxins which are produced in the plants by the genetic material of Bacillus Thuringiensis (for example by the genes CryIA(a), CryIA(b), CryIA(c), CryIIA, CryIIIA, CryIIIB2, Cry9c, Cry2Ab, Cry3Bb and CryIF and their combinations) (hereinbelow "Bt plants"). Traits which are also particularly emphasized are the increased defence of plants against fungi, bacteria and viruses by systemic acquired resistance (SAR), systemin, phytoalexins, elicitors and resistance genes and correspondingly expressed proteins and toxins. Traits which are furthermore especially emphasized are the increased tolerance of the plants to specific herbicidal active compounds, for example imidazolinones, sulphonylureas, glyphosate or phosphinothricin (for example "PAT" gene). The specific genes which confer the desired traits can also occur in combinations with one another in the transgenic plants. Examples of "Bt plants" which may be mentioned are maize varieties, cotton varieties, soybean varieties and potato varieties sold under the trade names YIELD GARD® (for example maize, cotton, soybean), KnockOut® (for example maize), StarLink® (for example maize), Bollgard® (cotton), Nucotn® (cotton) and NewLeaf® (potato). Examples of herbicide-tolerant plants which may be mentioned are maize varieties, cotton varieties and soybean varieties which are sold under the trade names Roundup Ready® (glyphosate tolerance, for example maize, cotton, soybean), Liberty Link® (phosphinothricin tolerance, for example oilseed rape), IMI® (imidazolinone tolerance) and STS® (sulphonylurea tolerance, for example maize). Herbicide-resistant plants (bred conventionally for herbicide tolerance) which may also be mentioned are the varieties sold under the name Clearfield® (for example maize). Naturally, what has been said also applies to plant varieties which will be developed, or marketed, in the future and which have these genetic traits or traits to be developed in the future.

The active compounds can be converted into the customary formulations, such as solutions, emulsions, wettable powders, suspensions, powders, dusts, pastes, soluble powders, granules, suspoemulsion concentrates, natural and synthetic materials impregnated with active compound, and ultrafine encapsulations in polymeric materials.

These formulations are produced in the known manner, for example by mixing the active compound with extenders, that is, liquid solvents and/or solid carriers, optionally with the use of surfactants, that is, emulsifiers and/or dispersants and/or foam formers.

Suitable extenders are, for example, water, polar and unpolar organic chemical liquids, for example from the classes of the aromatic and nonaromatic hydrocarbons (such as paraffins, alkylbenzenes, alkyl naphthalenes, chlorobenzenes), of the alcohols and polyols (which can optionally also be substituted, etherified and/or esterified), of the ketones (such as acetone, cyclohexanone), esters (including fats and oils) and (poly)ethers, of the unsubstituted and substituted amines, amides, lactams (such as N-alkylpyrrolidones) and lactones, the sulphones and sulphoxides (such as dimethyl sulphoxide).

In the case of the use of water as an extender, organic solvents can, for example, also be used as cosolvents. Liquid solvents which are suitable are mainly: aromatics, such as xylene, toluene or alkylnaphthalenes, chlorinated aromatics or chlorinated aliphatic hydrocarbons, such as chlorobenzenes, chloroethylenes or methylene chloride, aliphatic hydrocarbons, such as cyclohexane or paraffins, for example mineral oil fractions, mineral oils and vegetable oils, alcohols, such as butanol or glycol as well as their ethers and esters, ketones, such as acetone, methyl ethyl ketone, methyl isobutyl ketone or cyclohexanone, strongly polar solvents, such as dimethylformamide and dimethyl sulphoxide, and water.

Solid carriers which are suitable are:
for example ammonium salts and ground natural minerals, such as kaolins, clays, talc, chalk, quartz, attapulgite, montmorillonite or diatomaceous earth, and ground synthetic minerals, such as highly-disperse silica, alumina and silicates; suitable solid carriers for granules are: for example crushed and fractionated natural rocks such as calcite, marble, pumice, sepiolite and dolomite, and synthetic granules of inorganic and organic meals, and granules of organic material such as sawdust, coconut shells, maize cobs and tobacco stalks; suitable emulsifiers and/or foam formers are: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates as well as protein hydrolysates; suitable dispersants are: for example lignin-sulphite waste liquors and methylcellulose.

Adhesives such as carboxymethylcellulose and natural and synthetic polymers in the form of powders, granules or latices, such as gum arabic, polyvinyl alcohol and polyvinyl acetate, and natural phospholipids, such as cephalins and lecithins, and synthetic phospholipids, can be used in the formulations. Other additives can be mineral and vegetable oils.

It is possible to use colorants such as inorganic pigments, for example iron oxide, titanium oxide and Prussian Blue, and organic dyestuffs, such as alizarin dyestuffs, azo dyestuffs and metal phthalocyanine dyestuffs, and trace nutrients such as salts of iron, manganese, boron, copper, cobalt, molybdenum and zinc.

The formulations in general comprise between 0.1 and 95% by weight of active compound, preferably between 0.5 and 90%, and additionally preferably extenders and/or surfactants.

The active compound content of the use forms prepared from the commercially available formulations can vary within wide ranges. The active compound concentration of the use forms can be in the range of from 0.0000001 up to 95% by weight of active compound, preferably between 0.0001 and 1% by weight.

Application is in a customary manner which is appropriate for the use forms.

### Use examples

### Example 1

In 5 replications, in each case 15 vines of the cultivar "Thompson Seedless 1948" are treated against soil-dwelling nematodes using a fogger. Here, a tank mix of the active compound (1-2) (SC 240) is applied after foliar application at the stated application rates with 0.25% of the adjuvant Acitvator 90, in comparison to imidacloprid (SC 550) after drench application by micro-irrigation injection. The water application rate is 75 gallons per acre 283,9 l per 4046,9 m² = 605 plants. Two applications of active compound (I-2) are carried out at an interval of 32 days.

Evaluation is carried out prior to the treatment and 30 days and 60 days after the first treatment by counting the number of nematodes in 500 g of soil.
a)

| Active compounds | Application rate per 605 plants | Activity against Meloidogyne incognita | | |
|---|---|---|---|---|
| | | 0 d | 30 d | 60 d |
| Imidacloprid | 14 fluid ounces = 414 ml | 267 | 171 | 188 |
| Active compound (I-2) | 12.5 fluid ounces =369 ml | 312 | 140.8 | 178.8 |
| Control | 0 | 342 | 336 | 308 |

b)

| Active compounds | Application rate per 605 plants | Activity against Mesocriconema xenoplax | | |
|---|---|---|---|---|
| | | 0 d | 30 d | 60 d |
| Imidacloprid | 14 fluid ounces = 414 ml | 1863 | 808.4 | 958.4 |
| Active compound (I-2) | 12.5 fluid ounces = 369 ml | 1817 | 861.2 | 942.8 |
| Control | 0 | 1630 | 1397.6 | 2083.2 |

c)

| Active compounds | Application rate per 605 plants | Activity against Pratylenchus sp. | | |
|---|---|---|---|---|
| | | 0 d | 30 d | 60 d |
| Imidacloprid | 14 fluid ounces = 414 ml | 406 | 320 | 319.6 |
| Active compound (I-2) | 12.5 fluid ounces = 369 ml | 826 | 371.2 | 454 |
| Control | 0 | 848 | 540 | 646 |

### Example 2

### Foliar Application of (1-2) to Citrus in Pots for Control of Tylenchulus semipenetrans

*Treatments:* 15 trees sprayed with (1-2 = Movento), 15 trees sprayed with water (presample each pot); 25 mL/tree

### Protocol:

Add Tylenchulus semipenetrans larvae to all pots. The following day take trees out of greenhouse. Cover top of pot to exclude spray from soil. (1-2) (SC 240) is sprayed in a concentration of 2.6 ml plus 2.5 ml adjuvant MSO (methylated seed oil), (100% active w/v, added to the spray solution at 0.25% v/v) per liter sprac solution. Spray canopy from two sides of trees to runoff with a 2 gallon = 7,57 l "Sure Spray" pump sprayer (Chapin Mfg.) using a nozzle that delivers a cone shape spray pattern. Allow material to dry before returning plants to greenhouse. Repeat in 14 days.

For this citrus nematode trial, 5-year old Volkamer lemon seedlings are infested with *T*. *semipenetrans* obtained from the field and maintained in the greenhouse (25-32 °C) for use in pesticide trials. Trees used in the experiment are not treated with nematicidal compounds. The seedlings are growing in a 50:50 mixture of Astatula sand (97% sand) and Pro-mix potting mixture in rectangular pots (10x10x30 cm). Trees are irrigated normally, but receive no fertilizer or pesticide treatments other than (1-2) during the experiment. Effects on citrus nematode are evaluated by soil sampling 30 days and 60 days after treatment.

### ANCOVA: pf versus treat (First nematode evaluation)

| Factor | Levels Values | | |
|---|---|---|---|
| treat | 2 | 0 | 1 |

### Analysis of Covariance for pf

| Source | DF | Adj SS | MS | F | P |
|---|---|---|---|---|---|
| Covariates | 1 | 12890661 | 12890661 | 15.12 | 0.001 |
| treat | 1 | 5665625 | 5665625 | 6.64 | 0.016 |
| Error | 27 | 23026066 | 852817 | | |
| Total | 29 | 41567938 | | | |

| Covariate | Coef | SE Coef | T | P | |
|---|---|---|---|---|---|
| pi | 0.2656 | 0.0683 | 3.888 | 0.001 | |

### ANCOVA: In pf versus treat

| Factor | Levels Values | | |
|---|---|---|---|
| treat | 2 | 0 | 1 |

### Analysis of Covariance for In pf

| Source | DF | Adj SS | MS | F | P |
|---|---|---|---|---|---|
| Covariates | 1 | 46.987 | 46.987 | 69.98 | 0.000 |
| treat | 1 | 5.563 | 5.563 | 8.29 | 0.008 |
| Error | 27 | 18.129 | 0.671 | | |
| Total | 29 | 68.114 | | | |

| Covariate | Coef | SE Coef | T | P | |
|---|---|---|---|---|---|
| In pi | 0.8075 | 0.0965 | 8.365 | 0.000 | |

### ANCOVA: pf2 versus treat (Second nematode evaluation)

| Factor | Levels Values | | |
|---|---|---|---|
| treat | 2 | 0 | 1 |

### Analysis of Covariance for pf2

| Source | DF | Adj SS | MS | F | P |
|---|---|---|---|---|---|
| Covariates | 1 | 37890104 | 37890104 | 12.06 | 0.002 |
| treat | 1 | 5907691 | 5907691 | 1.88 | 0.182 |
| Error | 27 | 84807883 | 3141033 | | |
| Total | 29 | 128580451 | | | |

| Covariate | Coef | SE Coef | T | P | |
|---|---|---|---|---|---|
| pi | 0.4553 | 0.131 | 3.473 | 0.002 | |

### ANCOVA: In pf2 versus treat

| Factor | Levels Values | | |
|---|---|---|---|
| treat | 2 | 0 | 1 |

### Analysis of Covariance for In pf2

| Source | DF | Adj SS | MS | F | P |
|---|---|---|---|---|---|
| Covariates | 1 | 32.587 | 32.587 | 32.61 | 0.000 |
| treat | 1 | 2.982 | 2.982 | 2.98 | 0.096 |
| Error | 27 | 26.980 | 0.999 | | |
| Total | 29 | 61.015 | | | |

| Covariate | Coef | SE Coef | T | P | |
|---|---|---|---|---|---|
| In pi | 0.6724 | 0.118 | 5.711 | 0.000 | |

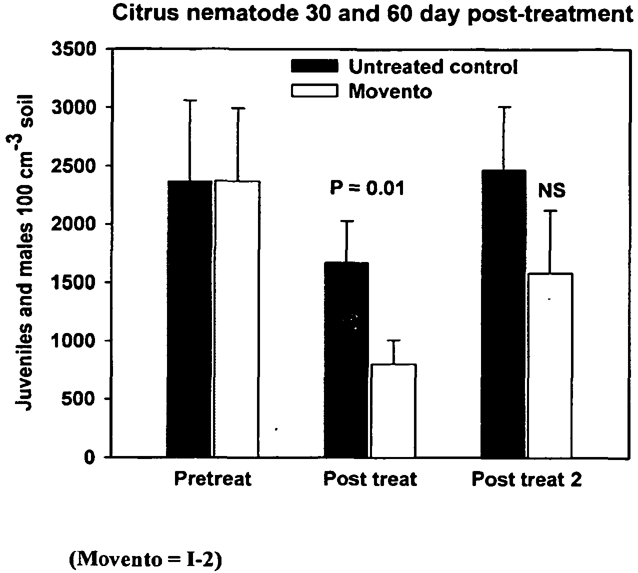

*Tylenchulus semipenetrans* raw data (juvenile and male nematodes per 100 cm² soil. Pi is initial population before treatment, Pf is final population at one and two months post treatment).

| Treat Pi | Treat Pf | Treat Pf2 | No treat Pi | No treat Pf | No treat Pf2 |
|---|---|---|---|---|---|
| 1625.0 | 638.16 | 4122.22 | 1387.5 | 3272.73 | 660.71 |
| 125.0 | 87.21 | 175.44 | 2237.5 | 733.77 | 6031.91 |
| 2190.0 | 1803.37 | 1409.84 | 2980.0 | 1850.57 | 4348.21 |
| 4250.0 | 1402.78 | 3205.36 | 7650.0 | 2308.22 | 5977.78 |
| 210.0 | 60.81 | 92.59 | 400.0 | 43.48 | 44.44 |
| 2490.0 | 1448.86 | 1481.13 | 100.0 | 269.23 | 428.57 |
| 250.0 | 86.21 | 551.02 | 530.0 | 1776.12 | 3084.91 |
| 125.0 | 54.35 | 531.25 | 7000.0 | 1664.63 | 4812.50 |
| 2412.5 | 168.83 | 181.82 | 787.5 | 1306.67 | 2336.73 |
| 2100.0 | 519.74 | 380.95 | 3760.0 | 3080.25 | 2314.81 |
| 1700.0 | 534.25 | 338.71 | 6675.0 | 4981.71 | 3564.81 |
| 9237.5 | 1440.00 | 1207.55 | 50.0 | 58.82 | 106.38 |
| 4180.0 | 2753.33 | 7807.69 | 1050.0 | 1954.55 | 1442.31 |
| 400.0 | 336.84 | 347.46 | 25.0 | 23.81 | 90.91 |
| 4250.0 | 708.33 | 1908.33 | 850.0 | 1739.13 | 1780.70 |

### Example 3

The experiment is carried out in a shade house at a temperature of around 78 F = 23,89°C (76-80 F). The experiment is conduced in a complete randomize design with seven treatments and six replications. 6 inch pots are filled with 1,500 g of steam pasteurized 90°C (194 F for 2:30 h) field soil per pot and a 4 weeks old tomato cv. Rutgers transplant is added. The soil is an Arredondo fine sand with ca. 92% sand and 1% om. The soil is taken from a site with no history of root-knot nematode infestation.

The first preventive treatments of Vydate CLV and (1-2) (SC 240; adjuvant: Dyne-Amic (a blend of nonionic and organosilicone surfactants and MSO), 99% active w/v, added 0.25% v/v) are applied as foliar spray. Fosthiazate 900 is applied as a soil drench in 151,4 l per 4046,9 m² 40 gallons water per acre. The second preventive application of Vydate and (I-2) are sprayed over foliage 7 days after 1^{st} treatment. The soil is inoculated by adding 5,000 eggs/pot of *Meloidogyne arenaria* one day after the 2^{nd} treatment. The curative treatments of Vydate and (1-2) are applied as a foliar spray on 21 and 28 days after inoculation with Meloidogyne arenaria.

All (1-2) and Vydate treatments are applied in 151,4 l per 4046,9 m² 40 gallons of water/acre by a CO₂ pressurized sprayer with a single 8003 VS TeeJet noozle. The tomato plants for each treatment are lined up in a row with the spray directed over their foliage until noticeable drip.

78 days after the 1^{st} treatment the plants are harvested. Each root system is evaluated for the percentage of root-knot nematode galling and eggs per root system. A I to 6 scale is used for estimating the number galls per root system as follows: 1 = no galls on the root system; 2 = 10%; 3 = 11 to 30%; 4 = 31 to 70%; 5 = 71 to 90%; 6= 100% root system galled. Following the determination of percentage of galling the roots are processed in a bleach solution to dissolve away the gelatinous matrix surrounding the eggs. Individual eggs are collection on a 500 mesh sieve and poured into a counting dish for determining their numbers.

### RESULTS

The nontreated uninoculated control plants have no galling and the roots are white and healthy in appearance (Table 1). Nontreated inoculated plants have darkened, rotting roots that showed visual signs of decay. Galls and egg masses are numerous and there are many large coalesced galls.

Plants treated with fosthiazate, except for one plant out of six, have darkened decaying roots with numerous galls and egg masses. Large portions of the root system have coalesced galls. Their general appearance is similar to that of the nontreated inoculated plants. The root system of plants treated with (1-2) via a foliar spray as a preventive treatment have numerous egg masses and coalesced galls; roots are dark in appearance but the number of egg masses appearless than that in the nontreated inoculated control plants. Roots of plants treated with Vydate foliar preventative treatment have numerous coalesced galls, but roots are whiter in appearance and rotting is much less apparent. There are less egg masses.

Roots of plants treated with (1-2) as a curative treatment have little darkening or rotting appearance. They have more fibrous roots and overall their appear to be a larger root system. Three of the six plants have little gall coalescing and there is an obvious appearance of fewer egg masses. Plants treated with Vydate as a curative treatment have more coalesced galls than the (1-2) treated plants. There is little appearance of rot and there are fewer egg masses.

Because there appeared to be fewer egg masses on tomato roots of some treatments the decision is made to count individual eggs to make a more quantitative determination among the treatments.

**Table 1. Average root-knot nematode galling indicies and number of eggs per tomato root system following treatments of fosthiazate, (I-2), and Vydate.**

| Treatment¹ | Rate | Galling index¹ | Number of eggs/root system 78 d after first treatment |
|---|---|---|---|
| 1. Untreated (without nematode) | | 0.0 | 0 |
| 2. Untreated (with nematode) | | 6_{.}0 | 727_{,}820 |
| 3. Fosthiazate - preventive | 2,72 kg a.i./4046,9 m² 6.0 lb ai/A | 5.3 | 453,500 |
| 4. Movento (I-2) - preventive Movento (I-2) - preventive | 0,035kga.i /4046,9 m² 0.0785 lb ai/A | 6.0 | 421,600 |
| 5. Vydate - preventive | 1.814 kg a.i. /4046,9 m² 4.0 lb ai/A | 5.2 | 333,500 |
| 6. Movento (I-2) - curative | 0.035 kga.i. /4046,9 m² 0.0785 lb ai/A | 4.5 | 141,000 |
| 7. Vydate - curative | 1.814kga.i./40469 m² 4.0 lb ai/A | 4.3 | 60,250 |

| | | | |
|---|---|---|---|
| ¹Subjective root-knot nematode gall rating scale 1 to 6 where 1 = no galls on root system; 2 = 10%; 3 = 11 to 30%; 4 = 31 to 70%; 5 = 71 to 90%; 6 = 100% of root system galled. Data are means of four replications. Means within a column followed by a common letter are not different according to Duncan's multiple-range test (*P*_{.} 0.05). | | | |

## Claims

1. Use of compounds of the formulae (I-1) and (1-2) 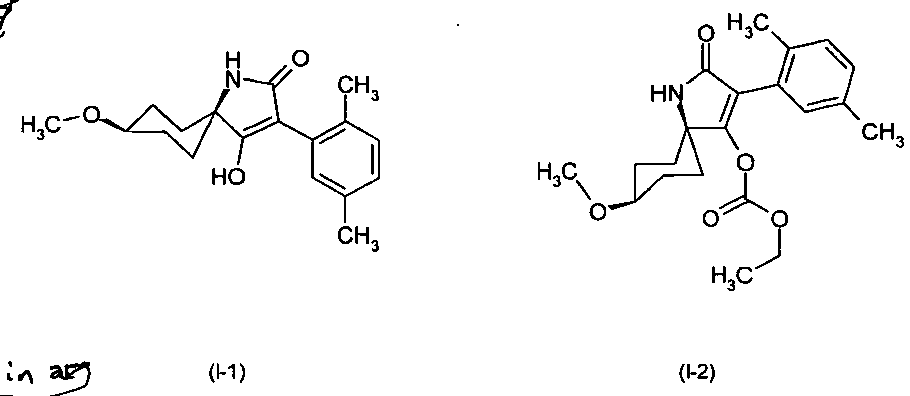 in a foliar treatment for controlling soil-dwelling plant-damaging nematodes in annual and perennial crops.

2. Use of the compounds of the formula (I-1) according to claim 1 for controlling soil dwelling plant-damaging nematodes in wine.

3. Use of the compounds of the formula (I-1) according to claim 1 for controlling soil dwelling plant-damaging nematodes in vegetables.

4. Use of the compounds of the formula (I-1) according to claim 1 for controlling soil dwelling plant-damaging nematodes in citrus.

5. Use of the compounds of the formula (1-2) according to claim 1 for controlling soil dwelling plant-damaging nematodes in grapevine.

6. Use of the compounds of the formula (I-2) according to claim 1 for controlling soil dwelling plant-damaging nematodes in vegetables.

7. Use of the compounds of the formula (1-2) according to claim 1 for controlling soil dwelling plant-damaging nematodes in citrus.

## Patentansprüche

1. Verwendung von Verbindungen der Formeln (I-1) und (1-2) 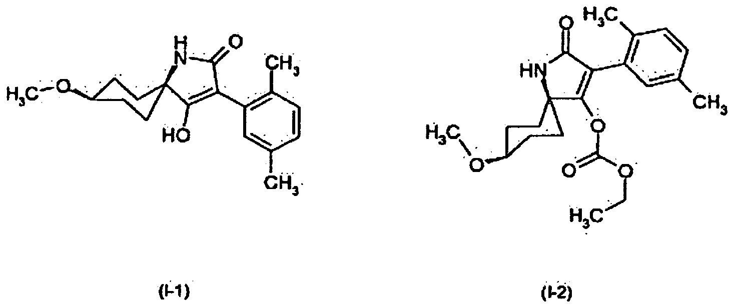 bei einer Blattbehandlung zur Bekämpfung von im Boden lebenden pflanzenschädigenden Nematoden in einjährigen und mehrjährigen Kulturen.

2. Verwendung der Verbindung der Formel (I-1) nach Anspruch 1 zur Bekämpfung von im Boden lebenden pflanzenschädigenden Nematoden in Weinreben.

3. Verwendung der Verbindung der Formel (I-1) nach Anspruch 1 zur Bekämpfung von im Boden lebenden pflanzenschädigenden Nematoden in Gemüse.

4. Verwendung der Verbindung der Formel (I-1) nach Anspruch 1 zur Bekämpfung von im Boden lebenden pflanzenschädigenden Nematoden in Zitrusfrüchten.

5. Verwendung der Verbindung der Formel (I-2) nach Anspruch 1 zur Bekämpfung von im Boden lebenden pflanzenschädigenden Nematoden in Weinreben.

6. Verwendung der Verbindung der Formel (I-2) nach Anspruch 1 zur Bekämpfung von im Boden lebenden pflanzenschädigenden Nematoden in Gemüse.

7. Verwendung der Verbindung der Formel (I-2) nach Anspruch 1 zur Bekämpfung von im Boden lebenden pflanzenschädigenden Nematoden in Zitrusfrüchten.

## Revendications

1. Utilisation de composés de formules (I-1) et (1-2) 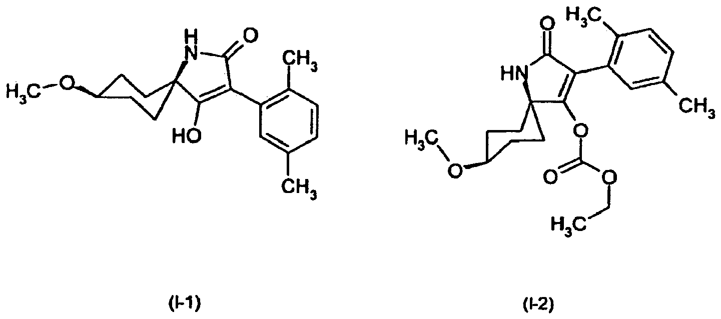 dans le traitement foliaire pour lutter contre les nématodes du sol ravageurs des plantes chez les cultures annuelles et pérennes.

2. Utilisation des composés de formule (I-1) selon la revendication 1, pour lutter contre les nématodes du sol ravageurs des plantes chez la vigne.

3. Utilisation des composés de formule (I-1) selon la revendication 1, pour lutter contre les nématodes du sol ravageurs des plantes chez les légumes.

4. Utilisation des composés de formule (I-1) selon la revendication 1, pour lutter contre les nématodes du sol ravageurs des plantes chez les agrumes.

5. Utilisation des composés de formule (1-2) selon la revendication 1, pour lutter contre les nématodes du sol ravageurs des plantes chez la vigne.

6. Utilisation des composés de formule (1-2) selon la revendication 1, pour lutter contre les nématodes du sol ravageurs des plantes chez les légumes.

7. Utilisation des composés de formule (1-2) selon la revendication 1, pour lutter contre les nématodes du sol ravageurs des plantes chez les agrumes.
